# EUROPÄISCHE PATENTANMELDUNG

(11) **EP 2 653 741 A2**
(43) Veröffentlichungstag der Anmeldung: **23.10.2013**
(21) Anmeldenummer: 13164340.5
(22) Anmeldetag: 18.04.2013
(51) Int. Cl.: F16C 33/38, F16C 19/16, F16C 29/06

(54) **Schrägkugellager**

(30) Priorität: 18.04.2012 DE 102012206376
(71) Anmelder: Aktiebolaget SKF, 41550 Göteborg (SE)
(72) Erfinder: Schnabl, Gregor, 4400 Steyr (AT); Schweitzer, Ferdinand, 3352 St. Peter in der Au (AT)
(74) Vertreter: Schonecke, Mitja

(57) **Zusammenfassung**

Die Erfindung betrifft ein Schrägkugellager (1) mit einem Lagerinnenring (2) und einem Lageraußenring (3), wobei zwischen den Lagerringen (2, 3) mindestens eine Kugelreihe angeordnet ist, wobei die Kugelreihe durch einen Käfig (4) gehalten wird und wobei für jede Kugel (5) der Kugelreihe eine Aufnahmetasche (6) im Käfig (4) angeordnet ist. Um eine höhere Drehzahlgrenze des Lagers zu erreichen, sieht die Erfindung vor, dass jede Aufnahmetasche (6) aus einem ersten (7) und einem zweiten (8) Abschnitt besteht, wobei die der Kugel (5) zugewandte Oberfläche (9) des ersten Abschnitts (7) zylindrisch ausgebildet ist, wobei die der Kugel (5) zugewandte Oberfläche (10) des zweiten Abschnitts (8) kugelzonenförmig ausgebildet ist und wobei in die der Kugel (5) zugewandten Oberfläche der Aufnahmetasche (6) mindestens eine Ringnut (11) eingearbeitet ist.

## Beschreibung

Die Erfindung betrifft ein Schrägkugellager mit einem Lagerinnenring und einem Lageraußenring, wobei zwischen den Lagerringen mindestens eine Kugelreihe angeordnet ist, wobei die Kugelreihe durch einen Käfig gehalten wird und wobei für jede Kugel der Kugelreihe eine Aufnahmetasche im Käfig angeordnet ist.

Schrägkugellager dieser Gattung sind allgemein bekannt. Dabei stellt es ein Problem dar, dass das Lager einer gewissen Drehzahlgrenze unterliegt, die nicht überschritten werden kann. Diese Grenze wird durch die Führungsfähigkeit der Käfigaufnahmetasche für den Wälzkörper (Kugel) bestimmt. Weiterhin ergibt sich durch die Konstruktion des Käfigs, d. h. insbesondere durch dessen Dimensionierung, die Festigkeit. Die Forderung nach einer hohen Festigkeit steht dabei dem Ziel entgegen, einen möglichst leichten Käfig zu schaffen.

Der Erfindung liegt die **Aufgabe** zugrunde, diesbezüglich eine verbesserte Lösung vorzuschlagen, mit der das Schrägkugellager eine höhere Drehzahlgrenze erreichen kann, was ohne Erhöhung des Gewichts des Käfigs erreicht werden soll.

Die **Lösung** dieser Aufgabe durch die Erfindung ist dadurch gekennzeichnet, dass jede Aufnahmetasche des Käfigs aus einem ersten und einem zweiten Abschnitt besteht, wobei die der Kugel zugewandte Oberfläche des ersten Abschnitts zylindrisch ausgebildet ist, wobei die der Kugel zugewandte Oberfläche des zweiten Abschnitts kugelzonenförmig ausgebildet ist und wobei in die der Kugel zugewandten Oberfläche der Aufnahmetasche mindestens eine Ringnut eingearbeitet ist.

Bevorzugt ist nur eine einzige Ringnut in die der Kugel zugewandte Oberfläche der Aufnahmetasche eingearbeitet. Besagte Ringnut ist dabei vorzugsweise im Übergangsbereich zwischen dem ersten und dem zweiten Abschnitt eingearbeitet.

Die Ringnut kann im Radialschnitt einen konkaven, bogenförmigen, insbesondere kreisbogenförmigen, Verlauf des Nutgrunds aufweisen. Der Übergang vom Nutgrund zum ersten und zum zweiten Bereich ist bevorzugt konvex ausgebildet.

Bewährt hat es sich in besonderer Weise, wenn die Tiefe der Ringnut zwischen 3 % und 6 % der radialen Höhe der beiden Abschnitte bzw. des Käfigs beträgt.

Der Käfig weist bevorzugt in seinem radial innenliegenden Bereich eine zylindrische Anlauffläche zum Anlauf an einer Gegenlauffläche des Lagerinnenrings auf. Somit kann der Käfig mit Mischführung geführt werden.

Der Käfig ist bevorzugt als Massivkäfig ausgebildet. Er besteht bevorzugt aus Kunststoff oder aus Metall, insbesondere aus Messing.

Die angestrebte Verbesserung des Laufverhaltens des Schrägkugellagers und insbesondere die Erhöhung der Drehzahlgrenze des Lagers ergibt sich durch eine vorteilhafte Verbesserung des Schmierstoffeinzugs in den Käfig bzw. in die Käfig-Aufnahmetaschen.

Zur Nomenklatur sei folgendes angemerkt: Wenn zwei zueinander parallele Ebenen eine Kugel schneiden, schneiden diese eine Kugelschicht aus der Kugel aus. Der gekrümmte Teil der Oberfläche besagter Kugelschicht bildet die oben genannte Kugelzone. Dieser Teil des Käfigs kann auch als Toroid-Teil bezeichnet werden.

Mit der genannten kombinierten Ausgestaltung der Aufnahmetasche des Käfigs durch einen zylindrischen und einen Toroid-Teil kann das Führungsspiel für die Kugeln in der Aufnahmetasche optimiert werden. Die Festigkeit des Käfigs kann ohne Erhöhung dessen Gewichts verbessert werden, wodurch sich eine höhere Drehzahleignung ergibt. Die Ringnut fungiert als Schmutzfangrille und Speicher für Schmiermittel.

Das Material des Käfigs kann bei der vorgeschlagenen geometrischen Ausgestaltung der Käfigtasche optimal ausgenutzt werden. Beim Einsatz von Messing kann im Vergleich zu vorbekannten Lösungen bis zu 20 % Gewicht gespart werden. Gegebenenfalls kann nämlich der Käfigaußendurchmesser bei sonst gleicher Leistungsfähigkeit des Käfigs reduziert werden, was die genannte Gewichtseinsparung erlaubt.

Somit kann die Leistung des Käfigs bei gleichbleibendem Basisdesign erhöht werden, wobei dennoch geringere Kosten (durch Materialersparnis) erreicht werden.

Die fortbildungsgemäße Mischführung des Käfigs (durch Anlauf des Käfigs am Lagerinnenring) begünstigt gemeinsam mit dem verbesserten Schmierstoffeinzug ebenfalls die Erhöhung der Drehzahlgrenze des Käfigs. Im Vergleich mit bestehenden Käfigen kann so eine um ca. 30 % erhöhte Drehzahlgrenze realisiert werden. Der Grundschmierstoff gelangt aus dem Wälzkontakt zum Käfig/Innenring-Schulter-Kontakt, was zu Leistungsvorteilen bei fettgeschmierten Anwendungen führt. Durch die Mischführung wird auch die Eignung des Käfigs bei Schwingungsbelastung verbessert (Kavitationsbetrieb, ungenügende axiale und radiale Mindestbelastung).

Durch die Mischführung am Innenring ergibt sich ferner bei Anwendungen mit sehr geringen Lasten oder bei entlastetem (Back-up)Lager ein zusätzliches Antriebsmoment auf den Käfig, wodurch ein optimaler Abrollvorgang der Wälzkörper sichergestellt wird.

Insgesamt ergibt sich in vorteilhafter Weise eine höhere kinematische Drehzahlgrenze bei geringeren Fertigungskosten durch Gewichtseinsparungen.

Vorteilhaft ist ferner die bessere Eignung des Lagers bzw. Käfigs bei Schwingungsbelastung und bei sehr geringen Lagerbelastungen.

In der Zeichnung ist ein Ausführungsbeispiel der Erfindung dargestellt. Es zeigen:

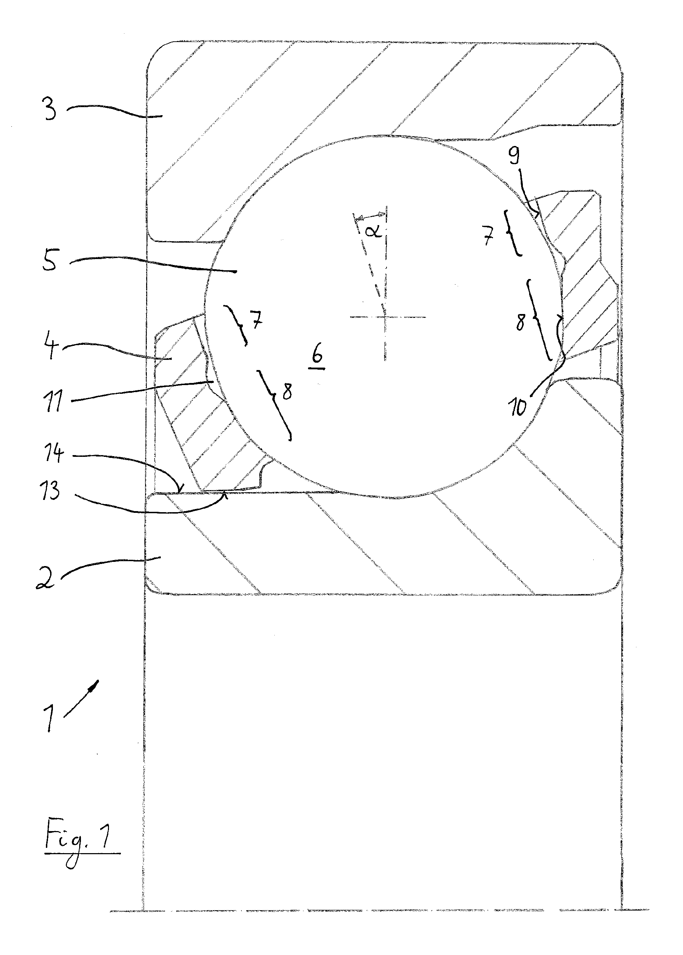

- Fig. 1: den Radialschnitt durch ein Schrägkugellager und
- Fig. 2: die vergrößerte Darstellung des linken unteren Bereichs gemäß Fig. 1.

In den Figuren ist ein Schrägkugellager 1 dargestellt, das einen Lagerinnenring 2 und einen Lageraußenring 3 aufweist. Zwischen den Lagerringen 2, 3 ist eine Kugelreihe angeordnet, die eine Anzahl Kugeln 5 umfasst. Diese sind in einem Käfig 4 gehalten. Der Käfig 4 hat eine Anzahl Aufnahmetaschen 6 für jede der Kugeln 5.

Wie anhand des Radialschnitts gesehen werden kann, hat der Käfig 4 zwei aneinander angrenzende Abschnitte. Ein erster Abschnitt 7 ist im radial außenliegenden Bereich des Käfigs 4 vorgesehen, ein zweiter Abschnitt 8 im radial innenliegenden Bereich. Der erste Abschnitt 7 erstreckt sich etwa über ein Fünftel bis ein Drittel der radialen Höhe h des Käfigs 4, der zweite über etwa ein Drittel bis die Hälfte derselben.

Die Oberfläche 9 des ersten Abschnitts 7, die der Kugel 5 zugewandt ist, ist zylindrisch ausgeführt. Die Achse des Zylinders ist unter einem Winkel α zur radialen Richtung angeordnet. Dieser Winkel entspricht dem Druckwinkel des Lagers und liegt zumeist im Bereich zwischen 10° und 40°, in Ausführungsbeispiel liegt er bei ca. 20°.

Die Oberfläche 10 des zweiten Abschnitts 8, die der Kugel 5 zugewandt ist, ist als Kugelzone ausgebildet, d. h. die Kugel 5 wird von diesem Abschnitt eingehüllt.

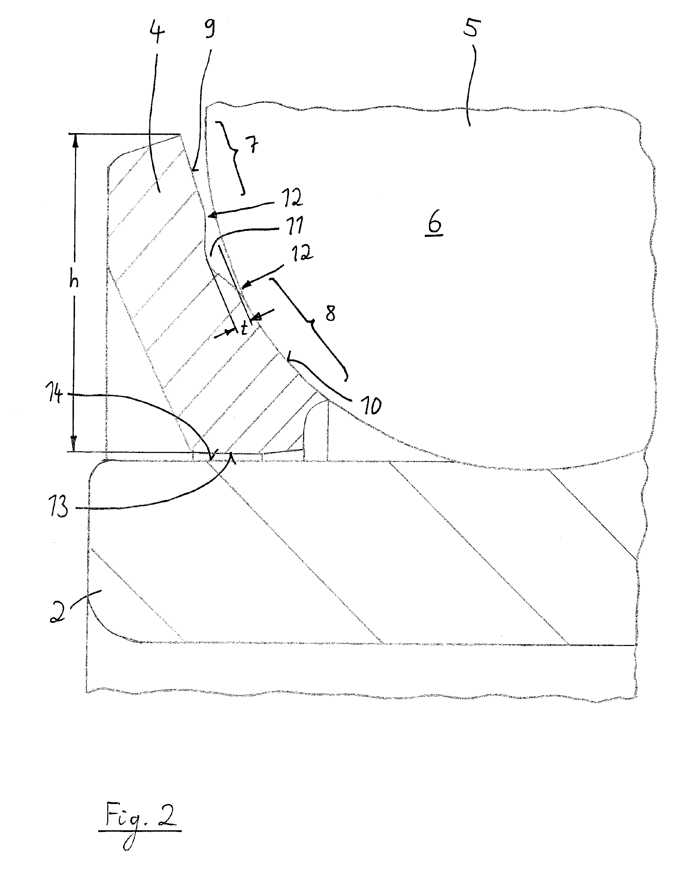

Zwischen den beiden Abschnitten 7 und 8 ist eine Ringnut 11 in die Oberfläche der Aufnahmetasche 6 eingebracht. Wie es am besten aus Fig. 2 zu erkennen ist, weist die Ringnut 11 eine Tiefe t auf. Für die Tiefe t hat sich eine Größenordnung besonders bewährt, die in Relation zur radialen Höhe h der beiden Abschnitt 7, 8, d. h. zur radialen Höhe des Käfigs 4 bemessen ist; hier hat sich ein Wert für die Tiefe t zwischen 3 % und 6 % der besagten radialen Höhe bewährt.

Der Nutgrund ist konkav ausgebildet. Der Übergang 12 vom Nutgrund zu den beiden Abschnitten 7, 8 ist konvex geformt.

Der Käfig 4 ist mischgeführt. Demgemäß wird er nicht nur durch den Anlauf an den Kugeln 5 geführt, sondern er hat auch noch eine Anlauffläche 13, die zum Anlauf an einer Gegenlauffläche 14 am Innenring 2 ausgebildet ist.

**Bezugszeichenliste**

| | |
|---|---|
| 1 | Schrägkugellager |
| 2 | Lagerinnenring |
| 3 | Lageraußenring |
| 4 | Käfig |
| 5 | Kugel |
| 6 | Aufnahmetasche |
| 7 | erster Abschnitt |
| 8 | zweiter Abschnitt |
| 9 | Oberfläche des ersten Abschnitts |
| 10 | Oberfläche des zweiten Abschnitts |
| 11 | Ringnut |
| 12 | Übergang |
| 13 | Anlauffläche |
| 14 | Gegenlauffläche |
| | |
| t | Tiefe der Ringnut |
| h | radiale Höhe der beiden Abschnitte |
| α | Winkel |

## Patentansprüche

1. Schrägkugellager (1) mit einem Lagerinnenring (2) und einem Lageraußenring (3), wobei zwischen den Lagerringen (2, 3) mindestens eine Kugelreihe angeordnet ist, wobei die Kugelreihe durch einen Käfig (4) gehalten wird und wobei für jede Kugel (5) der Kugelreihe eine Aufnahmetasche (6) im Käfig (4) angeordnet ist,
**dadurch gekennzeichnet,**
**dass** jede Aufnahmetasche (6) aus einem ersten (7) und einem zweiten (8) Abschnitt besteht, wobei die der Kugel (5) zugewandte Oberfläche (9) des ersten Abschnitts (7) zylindrisch ausgebildet ist, wobei die der Kugel (5) zugewandte Oberfläche (10) des zweiten Abschnitts (8) kugelzonenförmig ausgebildet ist und wobei in die der Kugel (5) zugewandten Oberfläche der Aufnahmetasche (6) mindestens eine Ringnut (11) eingearbeitet ist.

2. Schrägkugellager nach Anspruch 1, **dadurch gekennzeichnet, dass** eine einzige Ringnut (11) in die der Kugel (5) zugewandten Oberfläche der Aufnahmetasche (6) eingearbeitet ist.

3. Schrägkugellager nach Anspruch 1 oder 2, **dadurch gekennzeichnet, dass** die Ringnut (11) im Übergangsbereich zwischen dem ersten (7) und dem zweiten (8) Abschnitt eingearbeitet ist.

4. Schrägkugellager nach einem der Ansprüche 1 bis 3, **dadurch gekennzeichnet, dass** die Ringnut (11) im Radialschnitt einen konkaven, bogenförmigen, insbesondere kreisbogenförmigen, Verlauf des Nutgrunds aufweist.

5. Schrägkugellager nach Anspruch 4, **dadurch gekennzeichnet, dass** der Übergang (12) vom Nutgrund zum ersten und zum zweiten Bereich (7, 8) konvex ausgebildet ist.

6. Schrägkugellager nach einem der Ansprüche 1 bis 5, **dadurch gekennzeichnet, dass** die Tiefe (t) der Ringnut (11) zwischen 3 % und 6 % der radialen Höhe (h) der beiden Abschnitte (7, 8) beträgt.

7. Schrägkugellager nach einem der Ansprüche 1 bis 6, **dadurch gekennzeichnet, dass** der Käfig (4) in seinem radial innenliegenden Bereich eine zylindrische Anlauffläche (13) zum Anlauf an einer Gegenlauffläche (14) des Lagerinnenrings (2) aufweist.

8. Schrägkugellager nach einem der Ansprüche 1 bis 7, **dadurch gekennzeichnet, dass** der Käfig (4) als Massivkäfig ausgebildet ist.

9. Schrägkugellager nach einem der Ansprüche 1 bis 8, **dadurch gekennzeichnet, dass** der Käfig (4) aus Kunststoff besteht.

10. Schrägkugellager nach einem der Ansprüche 1 bis 8, **dadurch gekennzeichnet, dass** der Käfig (4) aus Metall, insbesondere aus Messing, besteht.
